# EUROPEAN PATENT APPLICATION

(11) **EP 2 767 943 A1**
(43) Date of publication of application: **20.08.2014**
(21) Application number: 13155651.6
(22) Date of filing: 18.02.2013
(51) Int. Cl.: G06Q 20/06, G06Q 20/32, G06Q 20/36

(54) **System and method for electronic money end of life management**

(71) Applicant: The Roberto Giori Company Ltd., 1009 Pully (CH)
(72) Inventor: Pinault, Francis, 34990 JUVIGNAC (FR)
(74) Representative: Santarelli

(57) **Abstract**

The present invention concerns a system and method for transferring electronic money. More particularly, it relates to improving the checking method used to validate the transfer at a central server. Furthermore the proposed solution improves the traceability of the operations. It is also proposed a data record to implement efficiently the electronic money.

Its purpose is to make the check of the consistency of the history of transactions related to a particular electronic banknote easier. The proposed solution minimizes the access to the database by embedding the history of transaction within the coding of the electronic banknote itself.

## Description

The present invention concerns a system and method for electronic money end of life management. More particularly, it relates to determining the occurrence of end of life of an electronic banknote and the regeneration process. The proposed solution improves the control of a central authority on the electronic money.

The electronic money is used within a global system as, for instance, the global system described in the patent application published under reference WO 2012/120011 A1 by the applicant. This system is named after inventor Roberto Giori the Global Standard for Money Technology (GSMT). In such a system, the electronic money is represented by a unique identification named IEDB standing for Identification of an Electronic/Digital Banknote. This IEDB is included in a digital data named RIEDB standing for reference of IEDB.

This electronic money is carried out by its owner in a digital wallet typically implemented as an application in a portable electronic device such as a mobile phone. The system is supervised and controlled by a centralized entity. This entity maintains a database of all the currency managed by the system. It also maintains a database of references of all the users of the system. The users may be registered users owning a reference in the system. In some embodiments the users may be known only by their mobile phone number registered in the course of a transaction.

While the system is registering all the transfers carried out by the users, the reconstitution of all the transactions related to a given electronic banknote is a difficult task. It takes time and it is needed to track all the transfer to find out the ones involving the given banknote.

Electronic money being represented by digital data records never wear out and may last forever, as opposed to paper banknotes which are subject to wear. Regular paper banknote destruction is carried out by central authorities to address banknote wear and also as a control means on emitted money supply. It is also a means for fraud detection if the number of banknotes to be destroyed is greater than expected or using some other rules. In another point of view, if some economics conditions change in a country, it can be necessary to devaluate the money by change facial value or to increase the value of money by suppressing a minor party of banknote in circulation. In those cases the usage of electronic money without means to control the money in circulation will be bad if we compare to the real banknote usage today.

The present invention has been devised to address one or more of the foregoing concerns. Its purpose is to propose a solution to implement a wear process to electronic money. It is proposed to manage an end of life mechanism for electronic money. It is also proposed a process for electronic money regeneration at the end of life. This process is advantageously carried out during a transaction based on the electronic banknote.

The invention concerns a method for managing the end of life of an electronic banknote represented by a data record comprising a unique identifier of said banknote, which comprises determining if the electronic banknote is at the end of life; generating a new electronic banknote in case the electronic banknote is determined as being at the end of life and substituting the electronic banknote determined as being at the end of life by the new electronic banknote.

According to one embodiment, determining if the electronic banknote is at the end of life comprises determining a start of life date of the electronic banknote; determining the life duration of the electronic banknote and comparing the life duration to a predetermined threshold.

According to one embodiment, determining a start of life date of the electronic banknote comprises reading the start of life embedded in a data field of the data record representing the electronic banknote.

According to one embodiment, determining a start of life date of the electronic banknote comprises determining the start of life as the date of the first transaction of a history of transactions embedded within the data record representing the electronic banknote.

According to one embodiment, determining if the electronic banknote is at the end of life comprises comparing the number of transactions in an history of transactions embedded within the data record representing the electronic banknote to a predetermined threshold, the electronic banknote being at the end of life if this number is greater than the threshold.

According to one embodiment, generating a new electronic banknote comprises generating a brand new electronic banknote having a different unique identifier.

According to one embodiment, generating a new electronic banknote comprises cleaning up the electronic banknote being at the end of life.

According to one embodiment, cleaning up the electronic banknote being at the end of life comprises suppressing a predetermined number of transactions, the suppressed transactions being the oldest.

According to one embodiment, the method further comprises preserving the transactions of a history of transactions embedded within the data record representing the electronic banknote related to the origin of the banknote.

According to one embodiment, cleaning up the electronic banknote being at the end of life comprises suppressing all the transactions that have occurred within a predetermined temporal window.

According to one embodiment, the method further comprises checking if the banknote is subject to a recall procedure and notifying the user that his banknote has been removed from the system.

According to one embodiment, checking if the banknote is subject to a recall procedure comprises asking to a central authority server is the banknote is subject to a recall procedure.

According to one embodiment, the method further comprises previously sending an 'end of life' notification to a mobile device of a user and receiving the electronic banknotes handled by said mobile device.

According to one embodiment, the method further comprises determining a period of time and a given number and sending the given number of 'end of life' notification during each period of time.

The invention also concerns a computer program product for a programmable apparatus, the computer program product comprising a sequence of instructions for implementing a method according to the invention, when loaded into and executed by the programmable apparatus.

The invention also concerns a computer-readable storage medium storing instructions of a computer program for implementing a method according to the invention.

According to another aspect of the invention there is provided a computer program product for a programmable apparatus, the computer program product comprising a sequence of instructions for implementing a method according to the invention, when loaded into and executed by the programmable apparatus.

According to another aspect of the invention there is provided a computer-readable storage medium storing instructions of a computer program for implementing a method according to the invention.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system". Furthermore, the present invention may take the form of a computer program product embodied in any tangible medium of expression having computer usable program code embodied in the medium.

Since the present invention can be implemented in software, the present invention can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like. A transient carrier medium may include a signal such as an electrical signal, an electronic signal, an optical signal, an acoustic signal, a magnetic signal or an electromagnetic signal, e.g. a microwave or RF signal.

Embodiments of the invention will now be described, by way of example only, and with reference to the following drawings in which:
**Figure 1** illustrates the general architecture of the elements in the system involved in an electronic money transfer;
**Figure 2** illustrates the structure of a record representing an electronic banknote according to an embodiment of the invention;
**Figure 3** illustrates the structure of a record representing a transaction according to an embodiment of the invention;
**Figure 4** illustrates the data exchanges occurring in an electronic money transfer according to an embodiment of the invention;
**Figure 5** illustrates the schematic block diagram of a computing device for implementation of one or more embodiments of the invention;
**Figure 6** illustrates the main step of a process to manage the end of life of an electronic banknote according to an embodiment of the invention.

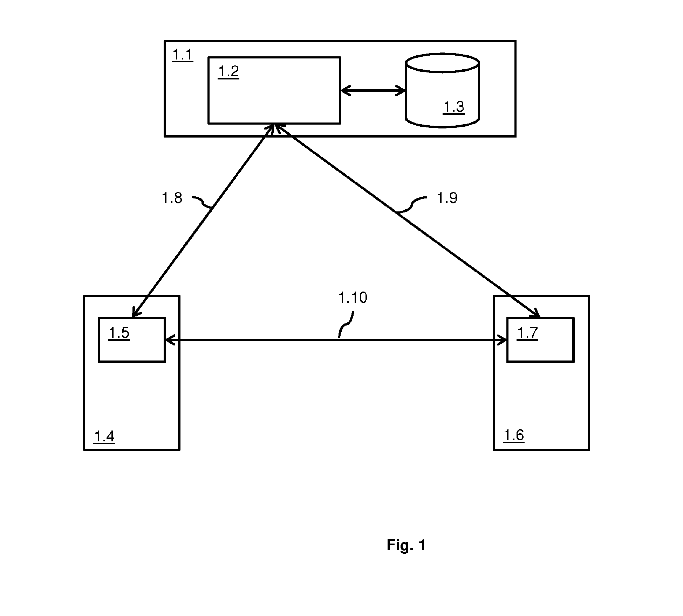

**Figure 1** illustrates the general architecture of the elements in the system involved in an electronic money transfer. The system comprises a central server **1.1.** This server may be physically implemented with a plurality of physical servers that may or not be located in a single place. Logically, it is constituted by a database that stores and handles different data stores. A first store registers all the electronic banknotes managed by the system. A second store registers the users of the system. These users may be registered users with a unique identity in the system. In some embodiment of the invention, some users may only be known by their phone number. Actually, this allows the system to be largely used by people without needing to create an account. The formalities to get a mobile phone subscription will replace a regular registration in the system.

A front end **1.2** is implementing the different functionalities made available to the users. It gathers the registration of a unique identity of users, the management of this unique identity and the management of the transfer of electronic money involved during a transaction between two users.

A first user owns a first mobile device **1.4** holding a virtual wallet **1.5.** Similarly, a second user owns a second mobile device **1.6** handling a second virtual wallet **1.7.** It should be understood that these mobile device may be of any kind as long as they got a user interface to interact with the user, memory storage to store the data representing the virtual wallet and communication means to communicate, references **1.8** and **1.9,** with the front end **1.2.** These communication means are typically using the data communication abilities of the device used for the connection to a data network as Internet. Advantageously, but not necessarily they may also include communication means to communicate directly, reference **1.10,** with each other. These direct means of communication may use wireless communication as Bluetooth, WiFi, NFC (standing for Near Field Communication) or others. All these technologies allow establishing a direct communication between two devices in the vicinity of each other and exchanging some data. Typically, the mobile device is a mobile phone, preferably of the smartphone category.

A typical electronic money transfer involves the following operations. Assuming the first user is the emitter, a request for the transfer is submitted from the virtual wallet **1.5** to the front end **1.2.** This request includes the identity in the system of the emitter. This identity may be constituted by the GSMT unique identifier of the user or by its phone number depending on the embodiment of the invention. The request also includes the identifier of the electronic banknote to be transferred and the identity of the recipient. This identity may be entered in the mobile device **1.4** by the emitter or advantageously it may be communicated by the second mobile device **1.6** using direct communication means **1.10.** Advantageously it also includes the face value of the banknote to be transferred, the time of the transaction request and the location of the emitter at that time.

When received by the frontend server **1.2,** the request is checked to determine its validity. Typically, the identity of the emitter is checked with its right to carry out such a transfer. The identity of the recipient is also checked. It is also checked to whether the electronic banknote is registered to actually belong to the emitter. The procedure may include other checks not described here. Next, if all these checks succeed, the frontend **1.2** send a request for approval of the transfer to the recipient, namely the second user. This request is sent to the second mobile device using the communication means **1.9.** The second user has to approve the transaction. An acknowledgment is then sent from the second mobile device to the frontend **1.2.** The frontend validates the transaction and acknowledges it to both users. The electronic money is no longer available in the virtual wallet of the first user while being present in the virtual wallet of the second user. At the server level, the electronic banknote is registered as belonging to the second user.

As a regular paper banknote, the electronic banknote passes from hand to hand as described. To improve the safety of the system and for traceability reason, it is desirable to be able to check the consistency of the history of transaction of a given electronic banknote at the moment of a transaction. This may be done at the server level but it implies some heavy requests in the database to build the history of all the transactions involving a given electronic banknote. Considering the global system contemplated by the invention, carrying out such history check by digging the global database while insuring real time operation of electronic money transfer is very difficult.

The gist of the invention is to bring an end of life mechanism to electronic money and to define a regeneration process of the electronic banknote. An example of detailed embodiment of the invention will now be described in a non-limitative way.

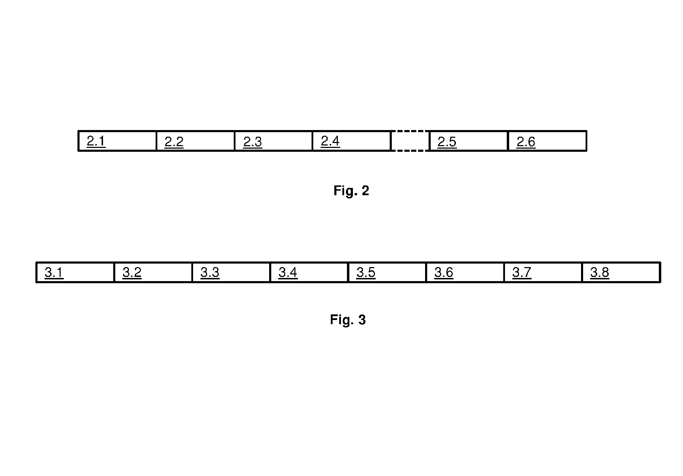

**Figure 2** illustrates the structure of a record representing an electronic banknote according to an embodiment of the invention. The first field **2.1** is the length of the data record in byte. Alternatively, this field may contain the length of the data record and the number of transactions stored within. The second field **2.2** is the IEDB itself, meaning the identifier of the electronic banknote. Advantageously, the third field **2.3** is the face value of the electronic banknote. Next, the data record includes the fields registering the transactions from field **2.4** to field **2.5** which number is variable. The structure of the transaction field will be detailed below in relation with **Figure 3****.** Advantageously, a last field **2.6** is there to insure the consistency of the record. This may be a checksum as, for instance, a CRC (Cyclic Redundancy Check). Preferably this field consists in a digital signature of the record by the server using asynchronous cryptography signature algorithm. Accordingly the record may be checked for its authenticity and its integrity.

**Figure 3** illustrates the structure of a record representing a transaction according to an embodiment of the invention. According to this embodiment, the first field **3.1** of the record is the identifier of the banknote, namely the IEDB. The second field **3.2** of the record is face value of the banknote. The field **3.3** is the emitter identifier. This identifier may be the GSMT user identifier of the emitter or alternatively his phone number. Next, the field **3.4** of the record is the identifier of the recipient of the transfer. Advantageously, the record may include the date **3.5** of the transaction with the time **3.6.** It may also include the location **3.7.** The location may be obtained automatically by virtue of geolocation means included in the mobile device. Today, most of the smartphone on the market include some geolocation means based on the Global Positioning System or GPS. These geolocation means may also be based on GSM base station triangulation or databases containing the location of WiFi access points. Advantageously, a last field **3.8** is there to insure the consistency of the record. This may be a checksum as, for instance, a CRC (Cyclic Redundancy Check). Preferably this field consists in a digital signature of the record by the server using asynchronous cryptography signature algorithm. Accordingly the record may be checked for its authenticity and its integrity.

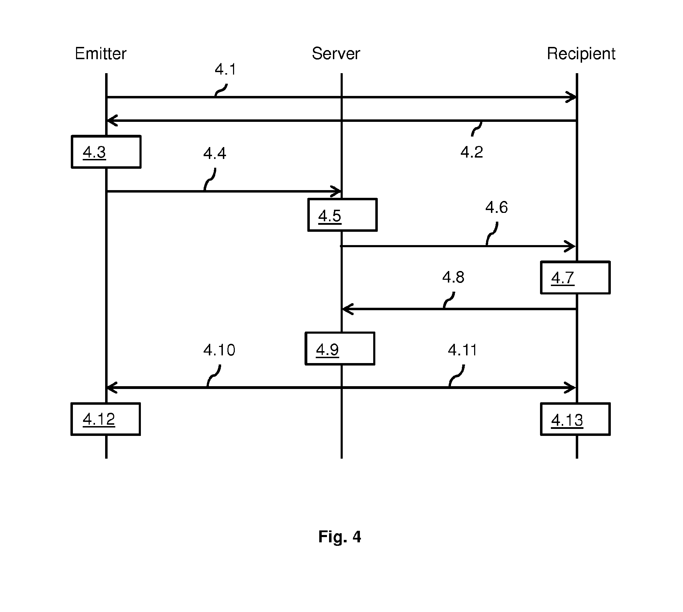

**Figure 4** illustrates the data exchanges occurring in an electronic money transfer according to an embodiment of the invention. The main steps involved in a method to carry out an electronic banknote transfer will now be described. The money transfer involves an emitter who is the owner of the electronic banknote and a recipient who is the recipient of the transfer. The server represents the authority managing the electronic money. Both the emitter and the recipient should have a virtual wallet typically operated by a mobile device such as a smartphone. The electronic banknote subject of the transfer belongs initially to the emitter and is managed in his virtual wallet on his mobile device. The emitter as an owner of electronic money is known from the authority managing this electronic money. He owns a unique identity on the server and is identified by a so called GSMT identifier. In some embodiment, this identifier may be his mobile phone number. Typically, the recipient is also known by the authority and also owns a unique identity on the server. In some embodiments, the recipient may be new to the authority. In the latter case, a unique identity will be created on the server in the process of the transfer. This unique identity will then be typically linked to the mobile phone number of the recipient. This unique identity may be automatically created for example based on the mobile phone subscription of the recipient using his phone number.

In a first step, the emitter needs to know about the recipient identifier, this identifier being a GSMT identifier or the phone number. This identifier may be communicated by the recipient to the emitter and entered in the virtual wallet by the latter. Advantageously, the emitter and the recipient establish a direct connection between their devices. This direct connection may be established based on Bluetooth, WiFi or NFC technologies. It may also be established over Internet using the data capabilities of the smartphones. Once the connection is established, the emitter virtual wallet sends a request **4.1** to the receiver virtual wallet to request the recipient identifier. The recipient's virtual wallet replies to this request with the message **4.2** containing the requested identifier.

During step **4.3,** the virtual wallet of the emitter generates a request **4.4** to be sent to the server of the authority for the transfer. Advantageously this request includes the identifier of the emitter, the identifier of the receiver and the data record representing the electronic banknote to be transferred. This data record is typically the data record described in relation to **Figure 2****.**

During step **4.5,** the server is first making some checks on the received request to validate the request. A first check is made on the identity of the emitter. For instance, it is verified if this user is known and is not subject to any restriction. The receiver is also checked for the same. In some embodiments, if the user is not already registered in the system, his unique identity is created at this moment. Next the data record representing the electronic banknote is validated. By virtue of the history of transactions embedded in the data record representing the electronic banknote, it is possible to check the coherency of the transaction chain. Therefore it is possible to check that the current owner is coherent with all the past transaction related to this banknote. This verification may be carried out without needing to access the database. This is a great advantage considering that the system is supposed to handle a great amount of users and transaction and that the response of the server needs to be made as fast as possible to allow a real time. By embedding the history of transactions right into the data record representing the electronic banknote, the desirable verifications may be conducted easily and rapidly saving the need to access in real time the huge central database to consolidate the chain of transactions in order to determine if the emitter is the actual owner of the banknote. Next, the record of the outstanding transaction is generated and integrated in the data record representing the electronic banknote. Its storage stands by waiting to the validation by the recipient.

Next, a request for validation **4.6** is sent to the recipient. Advantageously, this request includes the identifier of the emitter and the data record representing the electronic banknote including the outstanding transaction. During step **4.7,** the transaction is presented to the recipient for validation. Once the transaction has been validated by the recipient an acknowledgment **4.8** is sent back to the server. According to a particular embodiment of the invention, the recipient's virtual wallet may be adapted to carry out a validity check on the data record representing the electronic banknote. By virtue of the presence of the embedded history of transactions within the data record, a check of the transaction chain may be made by the wallet of the recipient. This allows the recipient to validate on his own the electronic money which is proposed to him without the need to access the central server.

During step **4.9,** the server checks the received data record representing the electronic banknote and checks it for coherency and validity. The outstanding transaction is then validated and stored in the database. Acknowledgments **4.10** and **4.11** are sent to both the emitter and the receiver to validate the transaction. The virtual wallets of the emitter and the recipient are updated accordingly in step **4.12** respectively **4.13.** The transferred banknote is removed from the virtual wallet of the emitter and added to the virtual wallet of the recipient.

As an electronic banknote may be subject to numerous transactions, the data record representing it may reach an important size. Advantageously, in an alternative embodiment, the complete data record representing the transaction in the data record representing the banknote is replaced by a reference of this data record stored in the server. This reference must allow the server to retrieve unequivocally the data record representing the transaction. It may be constituted by a unique identifier of the data record in the database. It may also be constituted by a hash function of the data record. It may also be constituted by a date referenced at absolute date with enough precision to give a reference. In general the date is coded on 64 bits (8 bytes). By storing only the references of the transaction embedded in the data record representing the electronic banknote this data record is kept of reasonable size.

It is to be noted that, in some embodiment of the system, the history of transactions is used to allow *a postiori* checks on the electronic banknote. The aim is to prevent a person to use the identity of a banknote to submit illegal transactions. Without the history of transaction, it would be possible to submit a request for a transaction using the banknote id which is not coherent with the global chain of transaction registered for this banknote. An *a postiori* check may consist in checking that the references of the transactions registered within the electronic banknote corresponds to the ones registered in the server. To do so, it is sufficient to compute the reference of each transaction involved in the history of transaction and check if this reference match the reference stored in the embedded history of transaction. Therefore, it is not needed that the reference stored in the embedded history of transaction represents the transaction unequivocally. A regular hash function may be used to this goal. By doing so, an old version of the electronic banknote with its embedded history of transaction that might have been stolen may not be used to generate a further illegal transaction.

The database storing the transaction may be used for statistical reason and history of transaction may be carried on based on the identity of the banknote, the date of the transaction, the identity of the user and the location. It may be used to detect malicious usages based on the frequency of transaction and locations. Malicious users may be identified.

However for some exchanges, it might be advantageous to further reduce the size of the exchanged data on the network. Typically, if the short messages service (SMS) is used as a transport bearer. The typical length of a SMS message is 160 bytes. In a context where a reasonable number of references of transactions must be kept in the data record and that the absolute date the invention is used as a reference, it is possible to code date by coding a difference with a reference date instead of coding the absolute date. The difference may be coded using only 32 bits where the absolute date is typically coded using 64 bits. The reference date may be, for example 1/01/2012 00:00:00 or the date of the first transaction of the given banknote.

Advantageously, to keep a maximum of number of transaction, it is possible to reduce the size of the references of previous transactions. For example, the original format of the date might be kept while reducing by truncation some of the time references. This process may be adapted according to number of existing references in the data record representing the banknote.

In the case where only transaction references are embedded in the electronic banknote, the check of the complete transaction chain to validate the owner of the banknote may be carried out in *a posteriori* check process to avoid accessing the database during the real time validation of the outstanding transaction. A check of the control sum, or better the electronic signature, of the data record associated with the *a posteriori* check of the complete transaction chain may be considered as sufficient to ensure a good level of security on the transfer.

According to the invention, a complete traceability of the transactions related to a given banknote is provided. This traceability may be checked without the need of digging a central data base. The traceability information is linked to the electronic banknote and follows it being embedded within the electronic representation of this banknote.

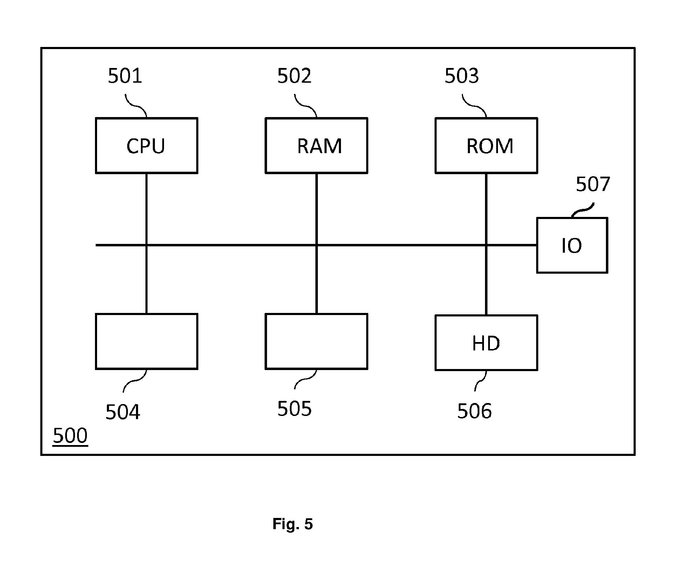

**Figure 5** is a schematic block diagram of a computing device **500** for implementation of one or more embodiments of the invention, typically the device handling the virtual wallet. The computing device **500** may be a device such as a micro-computer, a workstation or a light portable device. The computing device **500** comprises a communication bus connected to:
- a central processing unit **501,** such as a microprocessor, denoted CPU;
- a random access memory **502,** denoted RAM, for storing the executable code of the method of embodiments of the invention as well as the registers adapted to record variables and parameters necessary for implementing the method for encoding or decoding at least part of an image according to embodiments of the invention, the memory capacity thereof can be expanded by an optional RAM connected to an expansion port for example;
- a read only memory **503,** denoted ROM, for storing computer programs for implementing embodiments of the invention;
- a network interface **504** is typically connected to a communication network over which digital data to be processed are transmitted or received. The network interface **504** can be a single network interface, or composed of a set of different network interfaces (for instance wired and wireless interfaces, or different kinds of wired or wireless interfaces). Data packets are written to the network interface for transmission or are read from the network interface for reception under the control of the software application running in the CPU **501;**
- a user interface **505** may be used for receiving inputs from a user or to display information to a user;
- a hard disk **506** denoted HD may be provided as a mass storage device, alternatively, the mass storage may be constituted of flash memory;
- an I/O module **507** may be used for receiving/sending data from/to external devices such as a video source or display.

The executable code may be stored either in read only memory **503,** on the hard disk 506 or on a removable digital medium such as for example a disk. According to a variant, the executable code of the programs can be received by means of a communication network, via the network interface **504,** in order to be stored in one of the storage means of the communication device **500,** such as the hard disk **506,** before being executed.

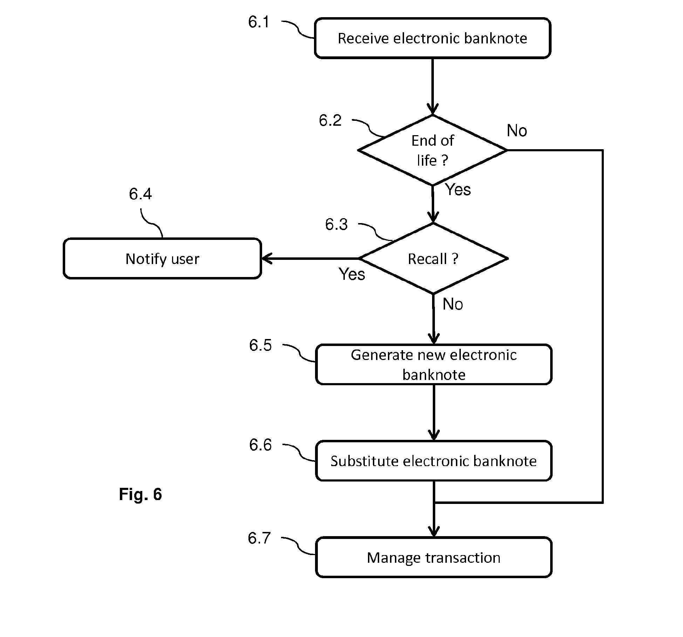

The central processing unit **501** is adapted to control and direct the execution of the instructions or portions of software code of the program or programs according to embodiments of the invention, which instructions are stored in one of the aforementioned storage means. After powering on, the CPU **501** is capable of executing instructions from main RAM memory **502** relating to a software application after those instructions have been loaded from the program ROM **503** or the hard-disc (HD) **506** for example. Such a software application, when executed by the CPU **501,** causes the steps of the flowcharts shown in **Figures 6** to be performed.

Any step of the algorithm shown in **Figure 4** may be implemented in software by execution of a set of instructions or program by a programmable computing machine, such as a PC ("Personal Computer"), a DSP ("Digital Signal Processor") or a microcontroller; or else implemented in hardware by a machine or a dedicated component, such as an FPGA ("Field-Programmable Gate Array") or an ASIC ("Application-Specific Integrated Circuit").

**Figure 6** illustrates the main step of a process to manage the end of life of an electronic banknote according to an embodiment of the invention.

It is possible to predetermine time duration for the validity of the banknote. By fixing a time limit after the emission of the banknote, the central authority is able to check this time limit each time it has to handle an operation involving the banknote. Typically, this occurs for each transaction carried out as described in the foregoing. The validity check may be included in the checks **4.5** made when receiving a request **4.4** for a money transaction. Typically the process begins by a first step **6.1** where the server receives an electronic banknote usually embedded in a transaction request.

According to a first embodiment, the moment of the banknote emission is stored in a field of the data record representing the banknote. Alternatively, the date of the first transaction involving the banknote and embedded in the data record is used as the start of life of the electronic banknote, used as a start date for the validity time.

In a second step **6.2,** the server checks whether the banknote has reached its end of life. This check may be based on determining the life duration of the electronic banknote based on the start of life of the banknote. This life duration is compared to a predetermined threshold. If the predetermined life duration has been reached, the banknote is determined as having reached its end of life.

Alternatively, the life duration of the banknote may be determined by a maximum of transaction allowed. In this case, the server checks if that threshold has been reached in step **6.2.** The number of transaction may be stored as a field of the data record representing the banknote or may be calculated by counting the number of transactions embedded in the data record.

Advantageously, a test **6.3** to check if the banknote is subject to a recall procedure is carried out. For some reasons, for example legal reasons, the central authority may decide to remove the banknote. In that case, the user is notified in step **6.4** that his banknote has been removed from the system.

If not, the generation of a new electronic banknote is carried out in step **6.5.** It may consist in the generation of a brand new electronic banknote with a new identifier. This brand new electronic banknote may have the same face value. But in some cases, the face value of the new generated banknote may be different. Alternatively, the old banknote may be cleaned up during the generation process.

The clean-up process may consist in suppressing a predetermined number of transactions. The suppressed transactions are the oldest. Advantageously, the clean-up process guaranties that the transactions related to the origin of the banknote, namely the first one or the first two transactions, are preserved.

Alternatively, the clean-up process may consist in suppressing all the transactions that have occurred within a predetermined temporal window. All the transactions in the history of transactions are checked to determine if their associated date belongs to the predetermined temporal window. If this is the case the transaction is removed from the history.

The cleaned up banknote is used as the new electronic banknote resulting from the generation process. In the step **6.6** this new electronic banknote is used in the outstanding transaction in replacement for the old one. The transaction is then carried out in step **6.7** in the regular way as described in the foregoing.

It is worth noting that the management process of the end of life of the banknote, while being described in relation to a transaction, may be carried out at any time where the server is in charge of the electronic banknote.

According to another embodiment, an interface between the first server in charge of the describing steps **6.3** and a server in a financial establishment like central bank exists in order to obtain the decision executed in steps **6.4** or **6.5.** In this case, at step **6.3,** the server sends a request to the central authority to know if a recall operation concerns the electronic banknote of interest. Depending on the response from the central authority, the step **6.4** or the step **6.5** are undertaken.

A central authority that controls a mass of such electronic banknote may decide to change all the emitted banknotes. Using the embodiment described in the foregoing it would be needed to wait for each banknote to be subjected to a transaction in order to be changed. There is no guarantee that all the banknotes would be changed in a bounded time.

According to another embodiment, the central authority who knows all the user identities in relation to their mobile phone numbers, decides to undertake a change of all the banknotes in circulation or a subset of these. The authority declares that all the concerned electronic banknotes are in end of life. It would then send an 'end of life' notification to all the concerned users. This 'end of life' notification is received at their mobile device. In this embodiment, the mobile device, typically within the virtual wallet application, holds a specific module to answer such notification. This module in response to the 'end of life' notification sends all the electronic banknotes to the server. The process described in relation to **figure 6** may then be undertaken as already described. In this case the response to the interrogation step **6.2** is always yes. The step **6.7** where the transaction is managed with the new substituted banknote consists in sending the new banknote back to the user. This procedure, while initiated by a central authority will be typically handled by the central server managing the system.

According to an alternate embodiment, in order to avoid the servers to be overloaded, the process of sending the 'end of life' notifications is spread in time. For example, a time period may be defined. During each time period a given number of 'end of life' notifications are sent to users. This process is repeated until the total number of 'end of life' is sent. Accordingly, it is possible to control the load of the servers by choosing suitable values for the time period and the given number of notifications to send during each time period.

Although the present invention has been described hereinabove with reference to specific embodiments, the present invention is not limited to the specific embodiments, and modifications will be apparent to a skilled person in the art which lie within the scope of the present invention.

Many further modifications and variations will suggest themselves to those versed in the art upon making reference to the foregoing illustrative embodiments, which are given by way of example only and which are not intended to limit the scope of the invention, that being determined solely by the appended claims. In particular the different features from different embodiments may be interchanged, where appropriate.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used.

## Claims

1. A method for managing the end of life of an electronic banknote represented by a data record comprising a unique identifier of said banknote, **characterized in that** it comprises:
- determining if the electronic banknote is at the end of life;
- generating a new electronic banknote in case the electronic banknote is determined as being at the end of life; and
- substituting the electronic banknote determined as being at the end of life by the new electronic banknote.

2. A method according to claim 1, **characterized in that** determining if the electronic banknote is at the end of life comprises:
- determining a start of life date of the electronic banknote;
- determining the life duration of the electronic banknote; and
- comparing the life duration to a predetermined threshold.

3. A method according to claim 2, **characterized in that** determining a start of life date of the electronic banknote comprises:
- reading the start of life embedded in a data field of the data record representing the electronic banknote.

4. A method according to claim 2, **characterized in that** determining a start of life date of the electronic banknote comprises:
- determining the start of life as the date of the first transaction of an history of transactions embedded within the data record representing the electronic banknote.

5. A method according to claim 1, **characterized in that** determining if the electronic banknote is at the end of life comprises:
- comparing the number of transactions in an history of transactions embedded within the data record representing the electronic banknote to a predetermined threshold, the electronic banknote being at the end of life if this number is greater than the threshold.

6. A method according to any one of claim 1 to 5, **characterized in that** generating a new electronic banknote comprises:
- generating a brand new electronic banknote having a different unique identifier.

7. A method according to any one of claim 1 to 5, **characterized in that** generating a new electronic banknote comprises:
- cleaning up the electronic banknote being at the end of life.

8. A method according to claim 7, **characterized in that** cleaning up the electronic banknote being at the end of life comprises:
- suppressing a predetermined number of transactions, the suppressed transactions being the oldest.

9. A method according to claim 8, **characterized in that** it further comprises:
- preserving the transactions of an history of transactions embedded within the data record representing the electronic banknote related to the origin of the banknote.

10. A method according to claim 7, **characterized in that** cleaning up the electronic banknote being at the end of life comprises:
- suppressing all the transactions that have occurred within a predetermined temporal window.

11. A method according to any one of claim 1 to 5, **characterized in that** it further comprises:
- checking if the banknote is subject to a recall procedure; and
- notifying the user that his banknote has been removed from the system.

12. A method according to claim 11, **characterized in that** checking if the banknote is subject to a recall procedure comprises:
- asking to a central authority server is the banknote is subject to a recall procedure.

13. A method according to any one claim 1 to 12, **characterized in that** it further comprises:
- previously sending an 'end of life' notification to a mobile device of a user; and
- receiving the electronic banknotes handled by said mobile device.

14. A method according to claim 13, **characterized in that** it further comprises:
- determining a period of time and a given number; and
- sending the given number of 'end of life' notification during each period of time.

15. A computer program product for a programmable apparatus, the computer program product comprising a sequence of instructions for implementing a method according to any one of claims 1 to 14, when loaded into and executed by the programmable apparatus.

16. A computer-readable storage medium storing instructions of a computer program for implementing a method according to any one of claims 1 to 14.
